# FASCICULE DE BREVET EUROPEEN

(11) **EP 0 984 857 B1**
(45) Date de publication et mention de la délivrance du brevet: **29.10.2003**
(21) Numéro de dépôt: 98928361.9
(22) Date de dépôt: 26.05.1998
(51) Int. Cl.: B32B 27/06, B32B 27/12, B32B 31/00, B29C 43/18, B29C 44/14

(54) **COMPLEXE EN FEUILLE UTILISABLE POUR REALISER LE REVETEMENT DE SURFACE DE STRUCTURES MOULEES ET PROCEDE POUR SON OBTENTION**
MEHRSCHICHTIGE BAHN VERWENDBAR ZUR ANFERTIGUNG VON DER OBERFLÄCHENAUSKLEIDUNG DER GEFORMTEN STRUKTUREN UND VERFAHREN ZUR HERSTELLUNG
SHEET COMPLEX USEFUL FOR SURFACE COATING OF MOULDED STRUCTURES AND METHOD FOR OBTAINING SAME

(30) Priorité: 30.05.1997 FR 9706914
(43) Date de publication de la demande: 15.03.2000
(73) Titulaire: TEXTILES ET PLASTIQUES CHOMARAT, 07160 Le Cheylard (FR)
(72) Inventeur: BACCUS, Gérard, F-07160 Accons (FR); SANIAL, Philippe, F-07160 Le Cheylard (FR); CLEDAT, Bruno, F-07160 Le Cheylard (FR)
(74) Mandataire: Vuillermoz, Bruno
(86) Numéro de dépôt international: FR9801052
(87) Numéro de publication internationale: WO98053991

(56) Documents cités:
- EP-A- 0 344 726
- EP-A- 0 466 179
- EP-A- 0 583 504
- EP-A- 0 744 489
- FR-A- 2 583 338
- FR-A- 2 700 497
- FR-A- 2 725 656
- US-A- 5 061 572
- US-A- 5 362 572

## Description

### Domaine technique

La présente invention a trait à un nouveau type de complexe en feuille utilisable pour réaliser le revêtement de surface de structures moulées, planes ou en forme, obtenues plus particulièrement par la technique de moulage dite « par injection basse pression ou séquentielle », le terme « injection » étant utilisé seul dans la suite de la description pour désigner une telle technique.

### Techniques antérieures

Dans de nombreux secteurs techniques, notamment dans le secteur de l'automobile, on utilise de plus en plus des structures moulées par injection d'une matière thermoplastique, polyoléfine notamment, par exemple pour réaliser les tableaux de bord, les assises ou dossiers de sièges, et les revêtements de portières.. .

Les complexes utilisés pour réaliser le revêtement de surface du noyau moulé, noyau qui peut être soit dense, soit constitué d'une mousse synthétique, peuvent être de différents types.

Ils peuvent, par exemple, être constitués par une simple feuille de matière thermoplastique (polyoléfine) dont la surface externe a reçu un traitement destiné à lui conférer un aspect, par exemple imitant le cuir, notamment un traitement de grainage.

Outre ces feuilles thermoplastiques, il a été également envisagé d'utiliser une structure textile simple, tissu ou tricot notamment.

En général, ces complexes ou feuilles sont rapportés à la surface de la structure moulée qui constitue donc un noyau après réalisation par moulage de cette dernière, l'association étant en général réalisée par collage ou tout autre moyen équivalent comme cela ressort notamment du FR-A-2 583 338, EP-A-0 583 504, FR-A-2 700 497, EP-A-0 744 489.

Il a également été proposé, comme cela ressort du FR-A 2 203 273, notamment pour réaliser des garnitures de sièges, d'utiliser un complexe en feuille comprenant une étoffe extensible associée par sa face interne à une couche de polymère thermoplastique thermoformable, cellulaire, telle que notamment une couche de PVC expansée.

Lors de l'opération de moulage, opération qui dans le cas de ce document est réalisée selon la technique dite « par injection sous vide », le revêtement destiné à constituer la surface de l'article moulé est associé au noyau lors du moulage de ce dernier, en disposant ledit revêtement à l'intérieur du moule puis en faisant le vide et en injectant alors dans ledit moule une composition de matière thermoplastique réticulable, éventuellement moussante, et enfin, lorsque la réticulation de la composition est terminée, en éliminant le vide et en démoulant la structure associée à son revêtement final.

Il a également été proposé, comme cela ressort notamment du FR-A-2 725 566, de réaliser des articles moulés par injection, notamment en polyoléfine qui comportent une feuille de surface mise en place dans le moule lors de la phase d'injection.

Ce document permet de résoudre l'un des problèmes qui se posent dans la réalisation d'une telle structure réalisée par injection sous vide, qui est celui de l'adhérence entre le matériau formant le revêtement de surface et le noyau injecté. Par suite, dans ce document, la face arrière du matériau comporte une structure apte à assurer la fonction d'accrochage mécanique de matière thermoplastique injectée dans le moule.

En revanche, il ne suggère pas qu'il soit possible de procéder d'une manière similaire lors d'une opération d'injection réalisée selon la technique « injection basse pression», qui implique l'utilisation d'une température élevée pouvant atteindre 220°C, voire même plus. En effet, dans un tel cas, il ne faut pas que, lors de cette opération, les caractéristiques du revêtement de surface soient détériorées par la chaleur et/la nature du polymère utilisé pour former le noyau.

### Exposé de l'invention

Or on a trouvé, et c'est ce qui fait l'objet de la présente invention, un nouveau type de matériau complexe qui peut être utilisé pour la réalisation d'articles moulés par injection basse pression, qui permet de résoudre l'ensemble des problèmes que pose la réalisation de tels articles,, à savoir adhérence avec le noyau injecté, protection thermique du complexe externe lors de la phase d'injection, non détérioration des caractéristiques (toucher, aspect...) de la couche de surface.

D'une manière générale, le complexe en feuille conforme à l'invention et qui est utilisable pour réaliser le revêtement de surface de structures moulées, notamment par la technique d'injection basse pression, se compose d'une structure plane destinée à constituer la « peau » de l'élément final, associée à une sous-couche destinée à adhérer avec la matière injectée, l'association de la structure moulée au complexe de surface étant réalisée pendant la phase même d'injection, et se **caractérise** en ce que la sous-couche constituant la face envers de ladite structure plane est constituée par un film à base d'une composition thermoplastique choisie dans la famille des polyoléfines, composition résytant à une température supérieure à la température d'injection, et qui forme à la fois une barrière thermique lors de cette phase opératoire et une couche d'adhérence avec la matière injectée.

Comme matériau constituant la couche de surface, on peut utiliser aussi bien un matériau en feuille extrudée à base d'une matière thermoplastique (polyéthylène par exemple), dont l'une des faces a reçu un traitement - grainage par exemple - lui donnant son aspect final, qu'une feuille à base de matière thermoplastique associée à une couche de mousse ou encore une structure textile (tissu, tricot..) simple ou associée à une couche de mousse.

Le film d'envers associé à la couche de surface et qui forme barrière thermique et couche d'adhérence avec la matière injectée, est constitué d'une structure multicouche constituée par une couche de polymères avec un point de fusion élevé pris en sandwich entre deux films à base de polyoléfine avec un point de fusion plus bas permettant d'obtenir l'accrochage d'une part avec la face envers de la couche de surface, et d'autre part, avec la surface de la matière injectée.

Dans la structure multicouche, les deux films de polyoléfine extérieurs peuvent contenir des groupements hydroxyl, anydrine maléïque, epoxy, afin d'obtenir une meilleure cohésion avec la couche centrale.

L'épaisseur de cette couche d'envers sera fonction de la protection thermique que l'on souhaite obtenir. Elle sera en général comprise entre 50 et 500 µm.

Lorsque la couche de surface est constituée par une feuille à base de matière thermoplastique ou une structure textile associée à une sous-couche de mousse, cette couche de mousse sera de préférence une mousse à base d'un polymère thermoplastique sélectionné dans la famille des polyoléfines, ce qui favorisera l'adhésion avec la sous-couche formant barrière thermique.

L'invention concerne également un procédé permettant de réaliser de tels complexes, ledit procédé se caractérisant en ce que l'association structure de surface/film d'envers est réalisée immédiatement en aval d'une filière d'extrusion d'un film de polyoléfine alors que ce dernier est encore à une température élevée, l'association étant obtenue au moyen d'une calandre. Lors de l'extrusion, le film sera extrudé à une température supérieure à 200°C, de préférence 230 à 260°C, afin d'obtenir une bonne fluidité de la matière, donc un bon accrochage entre la couche de surface et ledit film.

### Description sommaire des dessins

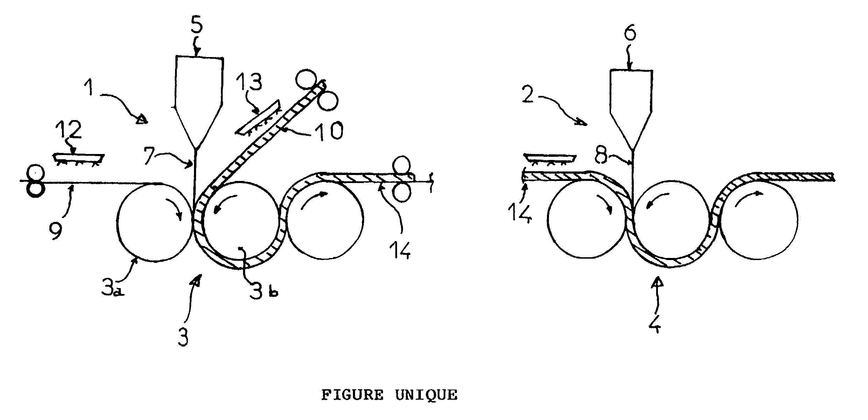

L'invention et les avantages qu'elle apporte sera cependant mieux comprise grâce aux exemples de produits réalisés conformément à l'invention, exemples donnés à titre indicatif mais non limitatif, de tels produits étant obtenus sur une ligne de production telle que schématisée à la figure unique annexée.

### Manière de réaliser l'invention

En se reportant à cette figure, les complexes en feuille conformes à l'invention et qui sont utilisables pour réaliser le revêtement de surface de structures moulées, notamment par la technique d'injection de matière thermoplastique (polyoléfine), sont obtenus sur une ligne de production permettant de réaliser en continu des matériaux complexes en feuille comprenant un support dont la face envers est associée à un revêtement constitué par un film extrudé, la liaison ou complexage des constituants étant réalisée par pression par calandrage, des moyens de préchauffage étant prévus en amont de la zone de complexage.

D'une manière générale, pour réaliser la totalité de la gamme de complexes conformes à l'invention, une telle installation se compose essentiellement de deux ensembles de complexage désignés respectivement par les références générales (1) et (2), ces ensembles étant disposés en série. Chaque ensemble de complexage comprend une calandre (3,4) associée à une extrudeuse (5,6) permettant de délivrer un film (7,8) de matière thermoplastique entre les deux rouleaux desdites calandres. Dans la forme de réalisation illustrée, les calandres (3,4) sont des calandres à trois cylindres, l'écartement entre deux cylindres consécutifs pouvant être réglé en fonction de l'épaisseur du complexe à réaliser et de la pression que l'on souhaite exercer lors du complexage.

Le cylindre intermédiaire de chaque calandre est un cylindre en acier qui peut être soit lisse soit grainé, alors que les cylindres extrêmes peuvent être soit en acier soit revêtus d'une couche de caoutchouc.

Les extrudeuses (5,6) sont des extrudeuses conventionnelles, qui peuvent être conçues pour produire soit des films monocouches, soit des films multicouches.

A ces ensembles de complexage, sont associés des ensembles d'alimentation (non représentés) permettant de délivrer des structures en feuille (9,10) préalablement réalisées, par exemple des feuilles de mousse de matière plastique ou des structures textiles, tels que tissus, tricots, non tissés.

Enfin, des moyens de préchauffage (12,13), constitués par exemple par des rampes à infrarouge, permettent éventuellement de préchauffer les matières à assembler.

### Exemple 1 (ne fait pas partie de l'objet des revendications)

On réalise un complexe constitué d'un revêtement de surface à base d'une structure textile que l'on revêt sur sa face envers d'une couche d'une matière thermoplastique extrudée destinée à former barrière thermique lors de la phase d'injection et élément d'accrochage avec le produit injecté. Pour réaliser un tel complexe, un seul des ensembles de complexage, par exemple l'ensemble (3), de la ligne de production illustré par le schéma annexé, est utilisé.

Dans un tel cas, on amène le tissu référencé (9) entre les deux premiers cylindres (3a,3b) de la calandre (3) après l'avoir éventuellement préchauffé au moyen de la rampe à infrarouge (12).

Ce tissu (9) qui est donc destiné à constituer la structure textile de surface d'ensembles moulés, est un tissu chaîne et trame pesant 260 g/m2, à base de fils polyester ayant un titre de 167 dtex et comportant chacun 30 brins, fils texturés par la technique dite par fausse torsion fixée, ledit tissu comportant 32 fils en chaîne et 21 fils en trame.

Sur la face envers du tissu (9) préchauffé, on extrude un film monocouche (7) constitué de polypropylène et de polyamide. L'extrusion de ce film est réalisée à une température de 260°C. En sortie de calandre, on obtient un complexe dans lequel la face envers du tissu (9) est recouverte d'une fine couche d'enduction, structure ayant une épaisseur d'environ 0,5 mm.

Une telle structure est particulièrement adaptée pour réaliser la « peau » d'articles moulés par injection basse pression, par exemple de pièces à base de polyéthylène pour lesquelles le moulage est réalisé à une température de 220°C.

Un tel complexe présente une grande souplesse, ce qui facilite sa mise en forme et peut par ailleurs être facilement découpé si cela est nécessaire.

### Exemple 2 (ne fait pas partie de l'objet des revendications)

On réalise un complexe, comportant un tissu (9) destiné à former un revêtement de surface de l'article moulé, ledit tissu étant recouvert d'une couche de mousse à base de polypropylène.

Dans un tel cas, l'association des différents constituants est réalisée en continu en utilisant les deux ensembles de complexage de l'installation illustrée.

Sur le premier ensemble de complexage (1), on réalise tout d'abord l'association du tissu polyester (9) avec une sous-couche (10) en mousse de polypropylène ayant une épaisseur de 3 mm et une densité de 67 kg/m3. Cette association est obtenue par complexage au moyen d'un film de polyéthylène (7) extrudé au moyen de la filière (5) entre les deux rouleaux (3a,3b) de la calandre (3). Les deux éléments (9,10) du complexe sont avantageusement préchauffés au moyen de rampes à infrarouge (12,13).

Le complexe ainsi formé (14) est donc constitué d'une face d'aspect constituée par le tissu (9) et d'une sous-couche de mousse (10). Ce complexe est amené au deuxième ensemble de complexage (4) où est réalisée la formation de la sous-couche d'envers destinée à former barrière thermique lors de l'opération de moulage.

Pour ce faire, on extrude au moyen de la filière (6) un film (8) constitué de polypropylène et de polyamide. L'extrusion de ce film est réalisée à une température de 260°C. En sortie de l'installation, on obtient un complexe ayant une épaisseur totale de 3,8 mm. Lors de l'opération d'injection, le film (8) d'une part, forme une barrière thermique et, d'autre part, facilite la liaison avec la matière injectée.

### Exemple 3 (ne fait pas partie de l'objet des revendications)

On répète l'exemple précédent si ce n'est que l'on remplace le tissu (9) par une feuille de polyoléfine grainée ayant une épaisseur de0,5 mm.

Sur la première calandre (3), l'envers de cette feuille est associé à une couche de mousse (10), cette association étant obtenue par extrusion d'un film (7) à base de polypropylène modifié anhydride maléique, puis, en continu, on revêt la face envers de cette couche de mousse (10) d'une pellicule de surface (8) comme dans l'exemple précédent.

Le complexe obtenu convient également pour la fabrication du revêtement de surface d'une pièce moulée par injection basse pression.

## Revendications

1. Complexe en feuille utilisable pour réaliser le revêtement de surface de structures moulées par la technique d'injection basse pression, ledit complexe étant constitué par une structure plane destinée à constituer la peau de l'élément final, associée à une sous-couche destinée à adhérer avec la matière injectée, l'association de la structure moulée et du complexe étant réalisée pendant la phase même d'injection, et dans lequel la sous-couche constituant la face envers de ladite structure (9) est constituée par un film à base d'une composition thermoplastique choisie dans la famille des polyoléfines, composition résistant à une température supérieure à la température d'injection, et qui forme une barrière thermique lors de cette phase opératoire ainsi que couche d'adhérence avec la matière injectée, **caractérisé en ce que** le film d'envers associé à la structure plane (9) est constitué d'un film multicouche comportant une couche de polymère ayant un point de fusion élevé prise en sandwich entre deux films à base de polyoléfine avec un point de fusion plus bas permettant d'obtenir l'accrochage d'une part, avec la face envers de la couche de surface, et d'autre part, avec la surface de la matière injectée.

2. Complexe selon la revendication 1, **caractérisé en ce que** les couches extérieures du film multicouche contiennent des groupements hydroxyl, anydrine maléïque, epoxy, améliorant la cohésion avec la couche centrale.

3. Complexe selon la revendication 1, **caractérisé en ce que** la structure plane (9) est constituée par une feuille à base de matière thermoplastique associée à une sous-couche de mousse.

4. Complexe selon la revendication 1, **caractérisé en ce que** la structure plane (9) est constituée par une structure textile (tissu, tricot..) simple ou associée à une couche de mousse.

5. Procédé pour la réalisation d'un complexe selon l'une des revendications 1 à 4, **caractérisé en ce que** l'association structure de surface (9)/film d'envers (8) est réalisée immédiatement en aval d'une filière d'extrusion (6) d'un film de polyoléfine alors que ce dernier est encore à une température élevée, l'association étant obtenue au moyen d'une calandre (4), le film étant extrudé à une température supérieure à 200°C, permettant d'obtenir une bonne fluidité de la matière, donc un bon accrochage entre la couche de surface et ledit film.

## Patentansprüche

1. Schicht-Verbundstoff, verwendbar zur Herstellung der Oberflächenauskleidung von durch die Technik der Niederdruck-Einspritzung geformten Strukturen, wobei der genannte Verbundstoff gebildet ist aus einer ebenen Struktur, die dazu bestimmt ist, die Haut des Endprodukts zu bilden, welche mit einer Unterschicht verbunden ist, die dazu bestimmt ist, an dem eingespritzten Material zu haften, wobei die Verbindung der geformten Struktur und des Verbundstoffes während der Einspritzphase selbst hergestellt wird, und bei dem die Unterschicht, welche die abseitige Fläche der genannten Struktur (9) bildet, aus einer Folie aus einer thermoplastischen Zusammensetzung, die aus der Familie der Polyolefine ausgewählt ist, besteht, wobei die genannte Zusammensetzung widerstandsfähig gegen eine Temperatur oberhalb der Einspritztemperatur ist, und welche während dieser Bearbeitungsphase eine thermische Sperre sowie eine Schicht zum Haften an dem eingespritzten Material bildet, **dadurch gekennzeichnet, daß** die mit der ebenen Struktur (9) verbundene abseitige Folie aus einer mehrschichtigen Folie besteht, welche eine Polymerschicht mit einem erhöhten Schmelzpunkt aufweist, welche sandwichartig zwischen zwei Schichten aus Polyolefin mit einem niedrigeren Schmelzpunkt eingefaßt ist, welche das Erreichen des Haftens einerseits an der abseitigen Fläche der Oberflächenschicht und andererseits an der Oberfläche des eingespritzten Materials erlauben.

2. Verbundstoff nach Anspruch 1, **dadurch gekennzeichnet, daß** die Außenschichten der mehrschichtigen Folie Hydroxyl-Gruppen, Maleinanhydrin-Gruppen, Epoxid-Gruppen enthalten, welche die Kohäsion mit der mittleren Schicht verbessern.

3. Verbundstoff nach Anspruch 1, **dadurch gekennzeichnet, daß** die ebene Struktur (9) aus einer Folie aus thermoplastischem Material besteht, die mit einer Unterschicht aus Schaum verbunden ist.

4. Verbundstoff nach Anspruch 1, **dadurch gekennzeichnet, daß** die ebene Struktur (9) durch eine einfache oder mit einer Schaumschicht verbundene textile Struktur (Gewebe, Wirkware...) gebildet wird.

5. Verfahren zur Herstellung eines Verbundstoffes gemäß einem der Ansprüche 1 bis 4, **dadurch gekennzeichnet, daß** die Verbindung Oberflächenstruktur (9)/abseitige Folie (8) unmittelbar hinter einem Extrusions-Mundstück (6) für eine Polyolefin-Folie ausgeführt ist, wenn letztere noch eine erhöhte Temperatur aufweist, wobei die Verbindung mittels eines Kalanders (4) erhalten wird, wobei die Folie bei einer Temperatur oberhalb von 200°C extrudiert wird, so daß das Erhalten einer guten Fließfähigkeit des Materials und folglich eines guten Haftens zwischen der Oberflächenschicht und der genannten Folie ermöglicht wird.

## Claims

1. Complex in sheet form, that can be used to produce the surface coating of structures moulded by the technique of low-pressure injection moulding, said complex being formed by a plane structure intended to constitute the skin of the final element, joined to an underlayer intended to adhere to the injection-moulded material, the moulded structure and the complex being joined together during the actual injection-moulding phase, and in which complex the underlayer constituting the reverse side of the said structure (9) is formed by a film based on a thermoplastic composition chosen from the family of polyolefins, which composition is resistant to a temperature above the injection-moulding temperature, and which forms a thermal barrier during this operating phase, and also a layer for adhesion to the injection-moulded material, **characterized in that** the reverse side film joined to the plane structure (9) consists of a multilayer film comprising a layer of a polymer having a high melting point sandwiched between two films based on a polyolefin having a lower melting point, making it possible to achieve bonding, on the one hand, to the reverse side of the surface layer and, on the other hand, to the surface of the injection-moulded material.

2. Complex according to Claim 1, **characterized in that** the external layers of the multilayer film contain hydroxyl, maleic anhydride or epoxy groups, improving cohesion with the central layer.

3. Complex according to Claim 1, **characterized in that** the plane structure (9) is formed by a sheet based on a thermoplastic joined to a foam underlayer.

4. Complex according to Claim 1, **characterized in that** the plane structure (9) is formed by a textile structure (woven, knit, etc.) by itself or joined to a foam layer.

5. Process for the production of a complex according to one of Claims 1 to 4, **characterized in that** the surface structure (9) is joined to the reverse-side film (8) immediately downstream of a die (6) for extruding a polyolefin film while the latter is still at a high temperature, the joining operation being carried out by means of a calender (4), the film being extruded at a temperature above 200°C, making "it possible to obtain good flow of the material, and therefore good bonding between the surface layer and the said film.
